# FASCICULE DE BREVET EUROPEEN

(11) **EP 0 578 582 B1**
(45) Date de publication et mention de la délivrance du brevet: **13.03.1996**
(21) Numéro de dépôt: 93401798.9
(22) Date de dépôt: 09.07.1993
(51) Int. Cl.: B60H 1/00

(54) **Dispositif de chauffage-ventilation et/ou de climatisation de l'habitacle d'un véhicule automobile**
Vorrichtung für die Heizung, Lüftung und/oder Klimatisierung eines Fahrzeuginnenraumes
Device for heating, ventilating and/or air conditioning the interior of a motor vehicle

(30) Priorité: 09.07.1992 FR 9208544
(43) Date de publication de la demande: 12.01.1994
(73) Titulaire: Valeo Climatisation, F-78321 La Verrière (FR)
(72) Inventeur: Dauvergne, Jean, F-95470 Fosses (FR)
(74) Mandataire: Gamonal, Didier

(56) Documents cités:
- DE-A- 3 023 236
- FR-A- 2 558 131
- PATENT ABSTRACTS OF JAPAN vol. 4, no. 147 (M-36)(629) 16 Octobre 1980 & JP-A-55 099 408 (MITSUBISHI JIDOSHA KOGYO K.K.) 29 Juillet 1980
- PATENT ABSTRACTS OF JAPAN vol. 10, no. 353 (M-539)(2409) 28 Novembre 1986 & JP-A-61 150 815 (NIPPON DENSO) 9 Juillet 1986

## Description

L'invention concerne un dispositif de chauffage-ventilation et/ou de climatisation de l'habitacle d'un véhicule automobile.

On connaît déjà des dispositifs de ce genre qui comprennent un pulseur d'air muni d'une entrée d'air et d'une sortie d'air pour de l'air pulsé, ainsi qu'un distributeur muni d'une entrée d'air reliée à la sortie d'air du pulseur, ce distributeur logeant un échangeur de chaleur pour réchauffer l'air admis dans le distributeur, et muni de sorties d'air pour envoyer de l'air froid ou réchauffé en differentes zones de l'habitacle.

Dans de tels dispositifs connus, l'air prélevé à l'extérieur de l'habitacle est pulsé par le pulseur d'air et envoyé dans le distributeur, dans lequel il est éventuellement réchauffé et ensuite envoyé dans l'habitacle au travers des sorties d'air, lesquelles sont contrôlées par des volets de réglage.

Dans les dispositifs connus de ce genre, le pulseur est placé de telle sorte que son entrée d'air soit proche d'une prise d'air, laquelle est généralement située en partie haute du capot moteur et à la base du pare-brise. Le distributeur est placé immédiatement à la suite du pulseur d'air, l'ensemble du dispositif présentant ainsi une disposition générale horizontale.

Du fait de cette implantation générale horizontale, ces dispositifs connus occupent une place importante soit sous la planche de bord du côté du passager, soit dans le compartiment moteur. Très souvent, cette implantation nécessite de concevoir un appareil, pour les véhicules à direction à gauche, non symétrique pour les véhicules à direction à droite, ce qui a un impact sur les coûts d'outillage.

De plus, ces dispositifs connus sont généralement d'un accès difficile, ce qui constitue un inconvénient à l'occasion d'opérations d'entretien ou de réparations.

Enfin, dans les dispositifs connus, il existe une communication de l'entrée d'air du pulseur vers l'habitacle de manière à faire circuler l'air d'habitacle; cette entrée est contrôlée par un système de volets de manière qu'elle soit fermée lorsque le pulseur aspire de l'air extérieur et vice versa. Compte tenu des contraintes d'encombrement dans les dispositifs connus, cette entrée d'air perturbe le fonctionnement du pulseur.

L'invention a notamment pour but de procurer un dispositif de chauffage-ventilation et/ou de climatisation de l'habitacle d'un véhicule automobile qui permet d'éviter les inconvénients mentionnés ci-dessus.

C'est en particulier un but de l'invention de procurer un tel dispositif qui occupe peu de place dans l'habitacle du véhicule automobile.

C'est aussi un des buts de l'invention de procurer un dispositif pouvant être installé indifféremment dans des véhicules à direction à droite ou à gauche.

C'est aussi un but de l'invention de procurer un tel dispositif qui ne prend pas de place dans la compartiment moteur.

C'est également un but de l'invention de doter le dispositif d'une entrée d'air de recirculation qui ne perturbe pas le fonctionnement du pulseur.

L'invention propose à cet effet un dispositif du type mentionné en introduction, dans lequel le pulseur étant placé en dessous du distributeur, en ce qu'il est prévu un conduit d'admission d'air qui s'étend dans une direction sensiblement verticale et qui est relié en partie supérieure à une bouche d'admission d'air extérieur et en partie inférieure à l'entrée d'air du pulseur et en ce que le conduit d'admission d'air est situé entre une cloison de séparation s'étendant de manière sensiblement verticale et séparant l'habitacle du compartiment moteur du véhicule.

Le dispositif de l'invention possède ainsi une disposition généralement verticale, contrairement aux dispositifs de la technique antérieure qui ont une disposition générale horizontale.

Ainsi le conduit d'admission d'air qui s'étend dans une direction sensiblement verticale permet de prélever l'air extérieur à partir d'une bouche d'admission implantée de la façon habituelle, généralement à la base du pare-brise, et de diriger cet air vers l'entrée du pulseur d'air, lequel est situé en partie inférieure du dispositif.

De plus, cette disposition verticale du dispositif lui permet d'être implanté dans l'habitacle, sous la planche de bord, entre la place réservée au conducteur et la place réservée au passager.

Le dispositif occupe ainsi une place réduite et son accès est facilité pour d'éventuelles opérations de réparations ou d'entretien.

Il en résulte que le dispositif n'occupe alors aucune place dans le compartiment moteur.

De préférence, ce conduit d'admission s'étend sensiblement sur toute la hauteur du distributeur et sur au moins une partie de la hauteur du pulseur d'air.

Le conduit d'admission d'air possède avantageusement une section transversale de forme générale allongée, par exemple rectangulaire, ayant une petite dimension s'étendant dans la direction longitudinale du véhicule et une grande dimension s'étendant dans la direction transversale du véhicule.

On forme ainsi un conduit étroit qui occupe peu de place tout en permettant un débit d'air important vers l'entrée du pulseur d'air.

Selon une autre caractéristique de l'invention, le conduit d'admission d'air comporte au moins une entrée d'air de recirculation communiquant avec l'intérieur de l'habitacle ainsi qu'un volet de réglage déplaçable entre une position de fermeture de cette entrée d'air de recirculation pour admettre de l'air extérieur dans le pulseur d'air et une position d'ouverture de l'entrée d'air de recirculation pour admettre de l'air recyclé dans le pulseur d'air.

On notera que cette disposition ne perturbe pas l'entrée d'air dans les ouïes d'aspiration du pulseur.

Selon une autre caractéristique de l'invention, le pulseur d'air comporte deux turbines alimentées chacune par deux entrées d'air, et entraînées en rotation par un moteur commun.

Dans le dispositif de l'invention, la sortie du pulseur d'air est avantageusement dirigée vers le haut et l'entrée du distributeur dirigée vers le bas.

Le dispositif de l'invention peut comporter un évaporateur placé entre la sortie du pulseur d'air et l'entrée du distributeur pour admettre de l'air climatisé dans le distributeur et permettre ainsi la climatisation de l'habitacle.

Dans ce cas, le dispositif comporte avantageusement un canal d'évacuation des condensats issus de l'évaporateur, ce canal communiquant avec l'évaporateur et s'étendant vers le bas le long du pulseur d'air. Ce canal permet d'évacuer les condensats sous le véhicule.

Dans la description qui suit, faite à titre d'exemple, on se réfère aux dessins annexés, sur lesquels :
- la figure 1 est une vue en coupe d'un dispositif selon l'invention implanté dans un véhicule automobile représenté partiellement, le plan de coupe étant vertical et s'étendant dans la direction longitudinale du véhicule ; et
- la figure 2 est une vue partielle en coupe suivant la ligne brisée II-II de la figure 1.

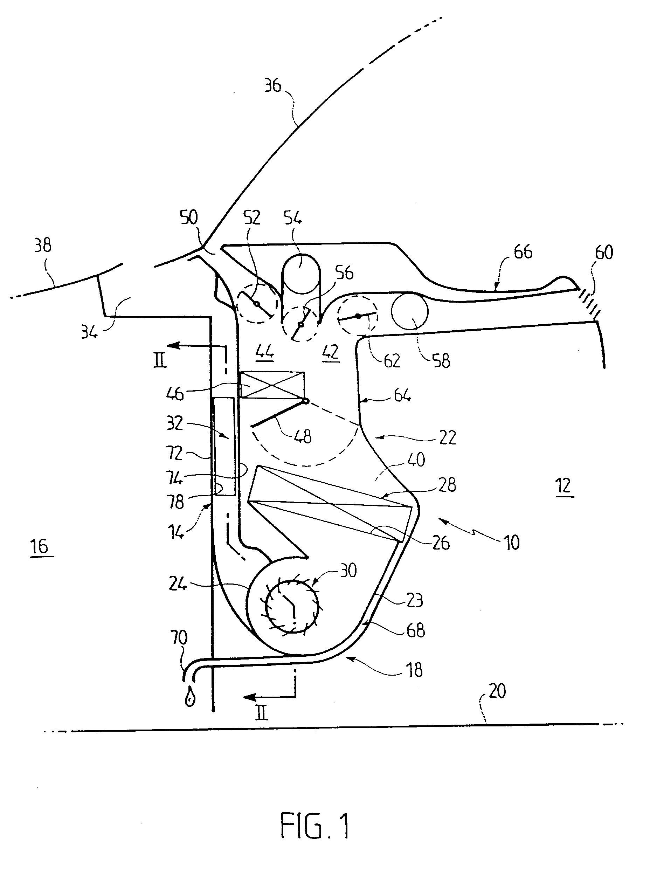

On se réfère tout d'abord à la figure 1 qui montre un dispositif de chauffage-ventilation-climatisation 10 selon l'invention destiné à l'habitacle 12 d'un véhicule automobile. Le dispositif 10 est placé, du côté habitacle, contre une cloison de séparation 14 sensiblement verticale qui sépare l'habitacle 12 du compartiment moteur 16 du véhicule. La cloison de séparation 14 qui constitue aussi une cloison pare-feu s'étend dans une direction transversale par rapport à la direction longitudinale du véhicule.

Le dispositif 10 est implanté verticalement contre la cloison 14 et il comprend essentiellement un pulseur d'air 18 placé en partie inférieure, à proximité du plancher 20 du véhicule automobile, ce pulseur d'air 18 étant placé verticalement en dessous d'un distributeur 22.

Le pulseur d'air 18 comporte un boîtier 23 en forme de volute muni d'une entrée d'air 24 orientée obliquement vers le haut en direction de la cloison 14 et d'une sortie d'air 26 qui est orientée vers le haut et qui reçoit un évaporateur 28. Le boîtier 23 loge intérieurement un groupe moto-ventilateur 30 qui sera décrit plus loin.

Le dispositif comporte en outre un conduit d'admission d'air 32 qui s'étend dans une direction sensiblement verticale en étant situé entre la cloison de séparation 14 et le distributeur 22.

Le conduit 32 s'étend sensiblement sur toute la hauteur du distributeur 22 et sur une partie de la hauteur du pulseur 18.

Le conduit d'admission d'air 32 est relié, en partie supérieure, à une bouche 34 d'admission d'air extérieur et, en partie inférieure, à l'entrée 24 du pulseur 18.

La bouche 34, également appelée "séparateur d'eau", est implantée, de façon en soi connue, à la jonction du pare-brise 36 et du capot 38.

Ainsi, de l'air prélevé à l'extérieur par la bouche 34 peut être dirigé vers le pulseur 18 et être envoyé par ce dernier vers le distributeur 22 après avoir traversé l'évaporateur 28 pour traiter cet air au travers de l'évaporateur.

Le distributeur 22 comporte une entrée d'air 40 qui est dirigée vers le bas et communique avec la sortie 26 du pulseur 18. L'entrée 40 communique avec une branche 42 de transmission d'air frais et une branche 44 de réchauffage d'air dans laquelle est placé un échangeur de chaleur 46, c'est-à-dire un radiateur de chauffage. Un volet de réglage 48 assure la répartition du débit d'air entre les deux branches 42 et 44 pour régler la température de l'air qui est ensuite envoyé dans l'habitacle par différentes sorties d'air.

Le distributeur 22 comporte, dans l'exemple, au moins une sortie d'air 50 débouchant à la base du pare-brise 36 pour permettre son dégivrage ou son désembuage, la sortie d'air 50 étant contrôlée par un volet pivotant 52. Le distributeur comporte en outre au moins une sortie 54 destinée à déboucher vers la base de l'habitacle, c'est-à-dire dans la région des pieds des passagers, au travers d'une conduite (non représentée). La sortie d'air 54 est contrôlée par un volet de réglage 56. Le distributeur 22 comporte aussi au moins une sortie d'air 58 formant aérateur latéral et une sortie d'air 60 formant aérateur central, ces deux sorties étant contrôlées par un volet pivotant 62.

L'ensemble du dispositif 10 est logé dans un boîtier 64 implanté verticalement et se rattachant à la planche de bord 66 du véhicule.

L'air pulsé par le groupe moto-ventilateur 30 passe à travers l'évaporateur 28 pour être éventuellement refroidi et déshumidifié, est ensuite éventuellement réchauffé par l'échangeur de chaleur 46 avant d'être envoyé dans l'habitacle par les sorties 50, 54, 58 et 60 contrôlées par les volets 52, 56 et 62.

Le dispositif 10 comporte aussi un canal 68 servant à l'évacuation des condensats issus de l'évaporateur 28, ce canal communiquant avec l'évaporateur et s'étendant vers le bas le long du boîtier 22 du pulseur 18. Le canal 68 possède une extrémité inférieure ouverte 70 permettant aux condensats d'être déchargés sous le véhicule.

Le conduit d'admission d'air 32 possède une section transversale de forme générale allongée, dans l'exemple rectangulaire, dont la petite dimension s'étend dans la direction longitudinale du véhicule et la grande dimension s'étend dans la direction transversale du véhicule.

Le conduit 32 est limité par une paroi antérieure 72 appliquée contre la cloison 14 et une paroi postérieure 74 parallèle à la paroi 72. Les parois 72 et 74 s'étendent sur toute la largeur du distributeur 22, par exemple sur une largeur d'environ 300 mm.

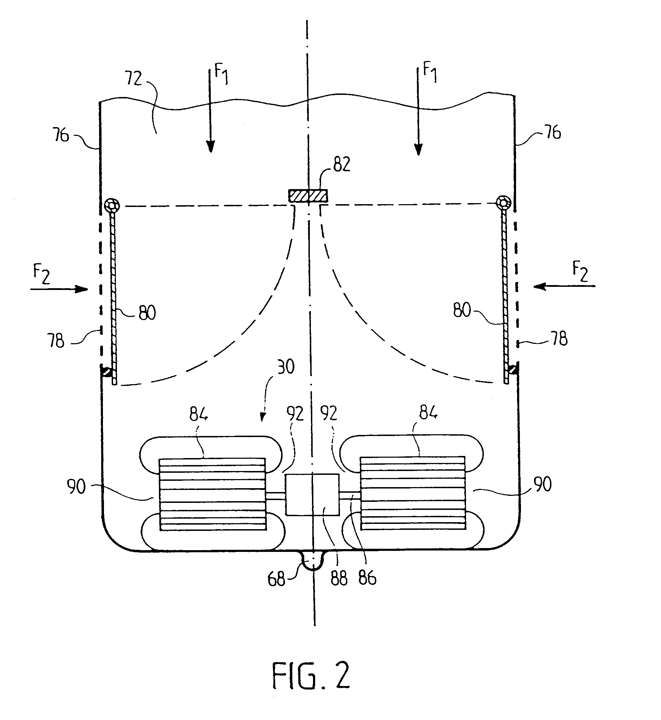

Le conduit 32 est en outre limité par deux parois latérales opposées 76 (figure 2) qui ont une largeur réduite, par exemple de l'ordre de 30 mm.

Chacune des parois 76 comporte une entrée d'air de recirculation 78 communiquant avec l'intérieur de l'habitacle et un volet de réglage 80. Chaque volet est déplaçable entre une position de fermeture de l'entrée 78 (représentée en trait plein sur la figure 2) et une position d'ouverture de l'entrée 78 (représentée en trait interrompu sur la figure 2).

Dans la position de fermeture de l'entrée 78, le groupe moto-ventilateur 30 est alimenté uniquement par de l'air provenant de l'extérieur du véhicule (flèches F1).

Dans la position d'ouverture de l'entrée 78, les deux volets 80 viennent en appui sur une butée commune 82, si bien que le groupe moto-ventilateur 30 est alimenté uniquement par de l'air de recirculation, provenant de l'habitacle (flèches F2). Bien entendu, il est possible de donner aux volets 80 des positions intermédiaires.

Comme montré également sur la figure 2, le groupe moto-ventilateur 30 du pulseur 18 comporte deux turbines 84 montées aux deux extrémités d'un axe horizontal 86 entraîné par un moteur 88. Chacune des deux turbines 84 est alimentée par deux entrées d'air 90 et 92. On remarquera que la disposition des volets 80 ne perturbe pas les entrées d'air 90, 92.

Le dispositif 10 peut être ainsi implanté dans une position générale verticale contre la cloison de séparation 14 sans occuper une place importante dans l'habitacle et sans prendre de place dans le compartiment moteur.

Il peut comporter ou non un évaporateur selon que le véhicule est équipé ou non de l'option climatisation.

## Revendications

1. Dispositif de chauffage-ventilation et/ou climatisation de l'habitacle d'un véhicule automobile, comprenant :
- un pulseur d'air (18) muni d'une entrée d'air (24) et d'une sortie d'air (26) pour de l'air pulsé,
- un distributeur (22) muni d'une entrée d'air (40) reliée à la sortie d'air (26) du pulseur (18), ce distributeur logeant un échangeur de chaleur (46) pour réchauffer l'air admis dans le distributeur, et étant muni de sorties d'air (50,54,58,60) pour envoyer de l'air froid ou réchauffé en différentes zones de l'habitacle, caractérisé en ce que le pulseur (18) et le distributeur (22) sont superposés verticalement, le pulseur étant placé en dessous du distributeur, en ce qu'il est prévu un conduit d'admission d'air (32) qui s'étend dans une direction sensiblement verticale et qui est relié en partie supérieure à une bouche (34) d'admission d'air extérieur et en partie inférieure à l'entrée d'air (24) du pulseur (18) et en ce que le conduit d'admission d'air (32) est situé entre une cloison de séparation (14) et le distributeur (22), ladite cloison de séparation s'étendant de manière sensiblement verticale et séparant l'habitacle (12) du compartiment moteur (16) du véhicule.

2. Dispositif selon la revendication 1, caractérisé en ce que le conduit d'admission d'air (32) s'étend au moins sur toute la hauteur de distributeur (22).

3. Dispositif selon l'une des revendications 1 ou 2 caractérisé en ce que le conduit d'admission d'air (32) s'étend au moins sur une partie de la hauteur du pulseur (18).

4. Dispositif selon l'une des revendications 1 à 3 caractérisé en ce que le conduit d'admission d'air (32) comporte une section transversale de forme générale allongée ayant une petite dimension s'étendant dans la direction longitudinale du véhicule et une grande dimension s'étendant dans la direction transversale du véhicule.

5. Dispositif selon l'une des revendications 1 à 4 caractérisé en ce que le conduit d'admission d'air (32) comporte au moins une entrée d'air de recirculation (78) communiquant avec l'intérieur de l'habitacle (12) et un volet de réglage (80) déplaçable entre une position de fermeture de l'entrée d'air de recirculation pour admettre de l'air extérieur dans le pulseur (18), et une position d'ouverture de l'entrée d'air de recirculation pour admettre de l'air recyclé dans le pulseur (18).

6. Dispositif selon l'une des revendications 1 à 5, caractérisé en ce que le pulseur (18) comprend deux turbines (84) alimentées chacune par deux entrées (90,92) et entraînées en rotation par un moteur commun (88).

7. Dispositif selon l'une des revendications 1 à 6 caractérisé en ce que la sortie (26) du pulseur (18) est dirigée vers le haut et en ce que l'entrée (40) du distributeur (22) est dirigée vers le bas.

8. Dispositif selon l'une des revendications 1 à 7 caractérisé en ce qu'il est prévu un évaporateur (28) placé entre la sortie (26) du pulseur (18) et l'entrée (40) du distributeur (22) pour admettre de l'air climatisé dans le distributeur, et en ce qu'il est prévu un canal (68) d'évacuation des condensats issus de l'évaporateur (28), ce canal communiquant avec l'évaporateur et s'étendant vers le bas le long du pulseur (18).

## Claims

1. A heating and ventilating, and/or air conditioning, apparatus for the cabin of a motor vehicle, comprising:
- an air blower (18) having an air inlet (24) and an air outlet (26) for the blown air,
- a distributor (22) having an air inlet (40) connected to the air outlet (26) of the blower (18), with a heat exchanger (46), for heating the air admitted into the distributor, being mounted in the distributor, and further having air outlets (50, 54, 58, 60) for delivering cold or heated air into various zones of the cabin, characterised in that the blower (18) and the distributor (22) are in vertically superimposed relationship, the blower being located below the distributor, in that an air admission duct (32) is provided which extends in a substantially vertical direction, and which is connected in an upper part to a fresh air admission port (34), and in a lower part to the air inlet (24) of the blower (18), and in that the air admission duct (32) is situated between a separating bulkhead (14) and the distributor (22), with the said separating bulkhead extending substantially vertically and separating the cabin (12) from the engine compartment (16) of the vehicle.

2. Apparatus according to Claim 1, characterised in that the air admission duct (32) extends at least over the whole height of the distributor (22).

3. Apparatus according to Claim 1 or Claim 2, characterised in that the air admission duct (32) extends over at least part of the height of the blower (18).

4. Apparatus according to one of Claims 1 to 3, characterised in that the air admission duct (32) has a generally elongated transverse cross section, a minor dimension of which extends in the longitudinal direction of the vehicle, with a major dimension thereof extending in the transverse direction of the vehicle.

5. Apparatus according to one of Claims 1 to 4, characterised in that the air admission duct (32) includes at least one recirculation air inlet (78) which communicates with the interior of the cabin (12), together with a regulating flap valve (80) which is displaceable between a position for shutting off the admission of recirculated air, so as to admit fresh air into the blower (18), and an open position for admitting recycled air into the blower (18).

6. Apparatus according to one of Claims 1 to 5, characterised in that the blower (18) has two fans (84), each of which is fed through two inlets (90, 92), and which are driven in rotation by a common motor (88).

7. Apparatus according to one of Claims 1 to 6, characterised in that the outlet (26) of the blower (18) is directed upwardly, and in that the inlet (40) of the distributor (22) is directed downwardly.

8. Apparatus according to one of Claims 1 to 7, characterised in that an evaporator (28) is provided, which is arranged between the outlet (26) of the blower (18) and the inlet (40) of the distributor (22), for admitting conditioned air into the distributor, and in that a duct (68) is provided for evacuation of condensates from the evaporator (28), this duct being in communication with the evaporator and extending downwardly along the blower (18).

## Patentansprüche

1. Vorrichtung für die Heizung, Lüftung und/oder Klimatisierung eines Fahrzeuginnenraums, bestehend aus:
- einem Luftgebläse (18) mit einem Lufteinlaß (24) und einem Luftauslaß (26) für Gebläseluft,
- einem Verteiler (22) mit einem Lufteinlaß (40), der mit dem Luftauslaß (26) des Gebläses (18) verbunden ist, wobei dieser Verteiler einen Wärmetauscher (46) für die Erwärmung der in den Verteiler eingelassenen Luft enthält und mit Luftauslässen (50, 54, 58, 60) versehen ist, um Kalt- oder Warmluft in verschiedene Bereiche des Fahrzeuginnenraumes einzuleiten , **dadurch gekennzeichnet,** daß das Luftgebläse (18) und der Verteiler (22) vertikal übereinander angeordnet sind, daß ein Luftzufuhrkanal (32) vorgesehen ist, der sich in einer in etwa vertikalen Richtung erstreckt und der im oberen Bereich mit einer Öffnung (34) für die Zufuhr von Außenluft und im unteren Bereich mit dem Lufteinlaß (24) des Luftgebläses (18) verbunden ist, und daß der Luftzufuhrkanal (32) zwischen einer Trennwand (14) und dem Verteiler (22) angeordnet ist, wobei diese Trennwand in etwa vertikal verläuft und den Fahrzeuginnenraum (12) vom Motorraum (16) des Fahrzeugs trennt.

2. Vorrichtung nach Anspruch 1 , **dadurch gekennzeichnet,** daß sich der Luftzufuhrkanal (32) zumindest über die gesamte Höhe des Verteilers (22) erstreckt.

3. Vorrichtung nach einem der Ansprüche 1 oder 2, **dadurch gekennzeichnet,** daß sich der Luftzufuhrkanal (32) zumindest über einen Teil der Höhe des Luftgebläses (18) erstreckt.

4. Vorrichtung nach einem der Ansprüche 1 bis 3, **dadurch gekennzeichnet,** daß der Luftzufuhrkanal (32) einen Querschnitt in einer allgemein länglichen Form besitzt, mit einer kleineren Seite, die sich in der Längsrichtung des Fahrzeugs erstreckt, und mit einer größeren Seite, die in der Querrichtung des Fahrzeugs verläuft.

5. Vorrichtung nach einem der Ansprüche 1 bis 4, **dadurch gekennzeichnet,** daß der Luftzufuhrkanal (32) wenigstens einen Umlufteinlaß (78) umfaßt, der mit dem Fahrzeuginnenraum (12) in Verbindung steht, sowie eine Regelklappe (80), die zwischen einer Schließposition zum Verschluß des Umlufteinlasses für die Zufuhr von Außenluft in das Luftgebläse (18) und einer Öffnungsposition zum Öffnen des Umlufteinlasses für die Zufuhr von Umluft in das Luftgebläse (18) verstellbar ist.

6. Vorrichtung nach einem der Ansprüche 1 bis 5, **dadurch gekennzeichnet,** daß das Luftgebläse (18) zwei Turbinen (84) umfaßt, denen jeweils durch zwei Lufteinlässe (90, 92) Luft zugeführt wird und die durch einen gemeinsamen Motor (88) drehend angetrieben werden.

7. Vorrichtung nach einem der Ansprüche 1 bis 6, **dadurch gekennzeichnet,** daß der Auslaß (26) des Luftgebläses (18) nach oben gerichtet ist und daß der Einlaß (40) des Verteilers (22) nach unten gerichtet ist.

8. Vorrichtung nach einem der Ansprüche 1 bis 7, **dadurch gekennzeichnet,** daß ein Verdampfer (28) vorgesehen ist, der zwischen dem Auslaß (26) des Luftgebläses (18) und dem Einlaß (40) des Verteilers (22) angeordnet ist, um dem Verteiler klimatisierte Luft zuzuführen, und daß ein Kanal (68) für die Ableitung des aus dem Verdampfer (28) kommenden Kondenswassers vorgesehen ist, wobei dieser Kanal mit dem Verdampfer in Verbindung steht und sich am Luftgebläse (18) entlang nach unten erstreckt.
